# EUROPEAN PATENT APPLICATION

(11) **EP 1 764 792 A2**
(43) Date of publication of application: **21.03.2007**
(21) Application number: 06300919.5
(22) Date of filing: 04.09.2006
(51) Int. Cl.: G11B 7/13

(54) **Method and device for reading angular multiplexed pits**

(30) Priority: 16.09.2005 EP 05108557
(71) Applicant: Thomson Licensing, 92100 Boulogne-Billancourt (FR)
(72) Inventor: Knittel, Joachim, 78052 Villingen-Schwenningen (DE)
(74) Representative: Schmidt-Uhlig, Thomas

(57) **Abstract**

The present invention relates to a method and a device (1) for reading angular multiplexed pits (13, 14) from optical recording media (8), and to an apparatus for reading from optical recording media using such method or device.

According to the invention, a method for detecting a rotation angle of an angular rotated pit (13, 14) on an optical recording medium (8) includes the steps of:
- irradiating the angular rotated pit (13, 14) with a light beam (9);
- determining at least two detector signals (A+B, C+D) for a light beam (9) reflected by the angular rotated pit (13, 14) with at least two detector areas of a detector (11); and
- calculating a difference signal (PS) of the at least two detector signals (A+B, C+D);

wherein the at least two detector signals (A+B, C+D) and the difference signal (PS) are determined in dependence of the position of the angular rotated pit (13, 14) relative to the mark center.

## Description

The present invention relates to a method and a device for reading angular multiplexed pits from optical recording media, and to an apparatus for reading from optical recording media using such method or device.

A well-known method to increase the storage capacity of optical recording media is to use a pit-substructure, e.g. the angular position of periodically aligned pits. This technology allows the storage of several bits of information in a single pit. Different pit shapes have been proposed to generate detectable angular signals, e.g. pits with one or more steps in depth, rotated "long pits", rotated "double-pits", etc. For example, in *"*DVD disks shine from all angles, Physics World November 2004", pits having an angular substructure in the form of a step being placed at one of 332 different angles is described. Illuminating non-rotational symmetric, reflective pit structures on a disk with a focused laser beam results in a non-rotational symmetric image on the detector. By using a special detector structure, it is possible to detect the angular substructure of the pits on the recording medium and to retrieve the stored information.

For example, US 5,617,389 discloses a detector for determining the rotation angle of angular multiplexed pits. The detector consists of a photodetector which is divided into eight light receiving areas. These areas approximately form a circular cylinder shape as a whole. A computing circuit calculates a plurality of information and error signals from the output signals of the light receiving areas.

It is an object of the invention to propose a method and a device for efficiently reading angular multiplexed pits from optical recording media using a simplified detector structure.

According to a first aspect of the invention, this object is achieved by a method for detecting a rotation angle of an angular rotated pit on an optical recording medium, having the steps of:
- irradiating the angular rotated pit with a light beam;
- determining at least two detector signals for a light beam reflected by the angular rotated pit with at least two detector areas of a detector; and
- calculating a difference signal of the at least two detector signals;
wherein the at least two detector signals and the difference signal are determined in dependence of the position of the angular rotated pit relative to the mark center.

According to a second aspect of the invention, this object is also achieved by a device for detecting a rotation angle of an angular rotated pit on an optical recording medium, including:
- a light source for irradiating the angular rotated pit with a light beam;
- a detector having at least two detector areas for determining at least two detector signals for a light beam reflected by the angular rotated pit; and
- a calculating unit for calculating a difference signal of the at least two detector signals;
wherein the at least two detector signals (A+B, C+D) and the difference signal (PS) are determined in dependence of the position of the angular rotated pit (13, 14) relative to the mark center.

Advantageously, the border between the detector areas is essentially parallel to a track on the optical recording medium. When an angular rotated pit passes through the focus spot of an objective lens used for reading, the detector areas yields at least two different signals. The peaks (or the phase) of these signals are shifted relative to each other. The shift depends on the rotation angle of the pit. By combining the signals of the detector areas it is possible to obtain a signal which yields information about the rotation angle. Though only two detector areas are needed for determining the rotation angle of the pit, preferably the detector is a four quadrant detector. This has the advantage that a conventional pickup with a quadrant detector can be used to detect the rotation angle of a rotated pit. Therefore, no hardware modification is necessary. At the same time tracking can be realized using the well known push-pull, focus error control with knife edge or astigmatism methods. A pickup employing a method or a device according to the invention can be used both with conventional and angular multiplexed optical recording media. Though tracking errors also lead to a phase shift of the signals of the different detector areas, this phase shift is rather small compared to the phase shift caused by the rotated pits. Furthermore, this phase shift has a low frequency and can easily be separated from the highfrequency signals of the rotated pits. The at least two detector signals and the difference signal are determined in dependence of the position of the angular rotated pit in track direction relative to the mark center. In this way a phase sensitive detection of the signals is realized when the pits are arranged periodically on the optical recording medium, e.g. by determining the difference signal at two different positions of the angular rotated pit relative to the mark center. The phase sensitive detection increases the sensitivity of the rotation angle determination.

Advantageously, in addition to the difference signal a sum signal of the at least two detector signals is also generated. This extends the range of detectable rotation angles to -90° to 90°, which is limited to -45° to 45° if only the difference signal is used.

Preferably, an apparatus for reading from optical recording media includes a device according to the invention or means for performing a method according to the invention for detecting a rotation angle of an angular rotated pit on an optical recording medium.

For a better understanding the invention shall now be explained in more detail in the following description with reference to the figures. It is understood that the invention is not limited to this exemplary embodiment and that specified features can also expediently be combined and/or modified without departing from the scope of the present invention. In the figures:
- Fig. 1: schematically shows a pickup for reading angular multiplexed pits,
- Fig. 2: depicts the position of the detector quadrants of the pickup relative to the track and the angular rotated pits,
- Fig. 3: shows the signals of the detector quadrants for an angular rotated pit with a rotation angle *u*=-45°,
- Fig. 4: shows the signals of the detector quadrants for an angular rotated pit with a rotation angle *u*=0°,
- Fig. 5: depicts pit angle signals PS in dependence of the mark position, and
- Fig. 6: shows a plot of an exemplary pit angle signal PA.

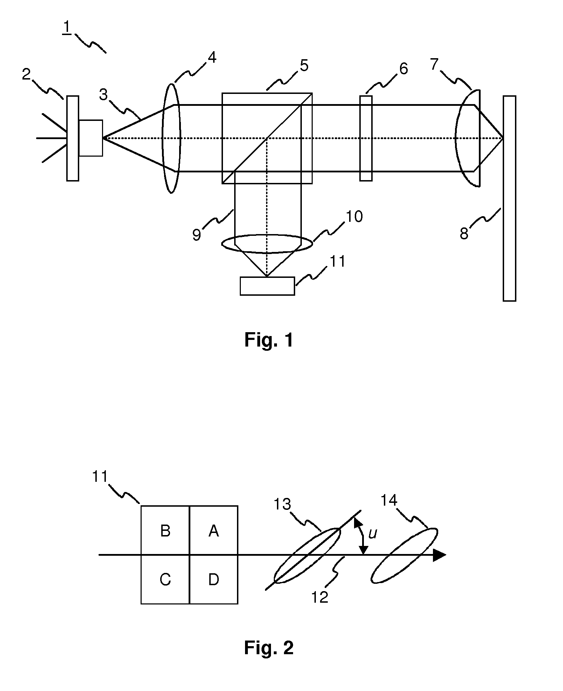

In Fig. 1 a pickup 1 for reading angular multiplexed pits is shown schematically. A laser diode 2 emits a linearly polarized light beam 3, which is collimated by a collimator lens 4. The collimated light beam 3 passes a polarization beam splitter 5 and a quarter wave plate 6, which transforms the light beam 3 into a circular polarized light beam 3, before it is focused onto an optical recording medium 8 by an objective lens 7. The light beam 9 reflected by the optical recording medium is collimated by the objective lens 7 and passes the quarter wave plate 6, which transforms the reflected light beam 9 into a linear polarized light beam 9. Due to the quarter wave plate 5, the direction of polarization of the reflected light beam 9 is perpendicular to the direction of polarization of the initial light beam 3. The reflected light beam 9 is consequently deflected by the polarization beam splitter 5 towards a focusing lens 10, which focuses the reflected light beam 9 onto a detector 11. The detector 11 has at least two detector areas. Preferably, the detector 11 is a four quadrant detector. The position of the detector quadrants of the pickup 1 relative to a track 12 of the optical recording medium 8 and the angular rotated pits 13, 14 is depicted in Fig. 2. In the figure, the first pit 13 is rotated relative to the track 12 by a rotation angle of u.

In the following the results of a simulation of the detection method according to the invention are described. For the simulation the following parameters are used:
- Wavelength: 405nm, circular polarized light on the optical recording medium
- Numerical aperture (NA) of the objective lens: 0.85
- Pit size: 320nm x 100nm

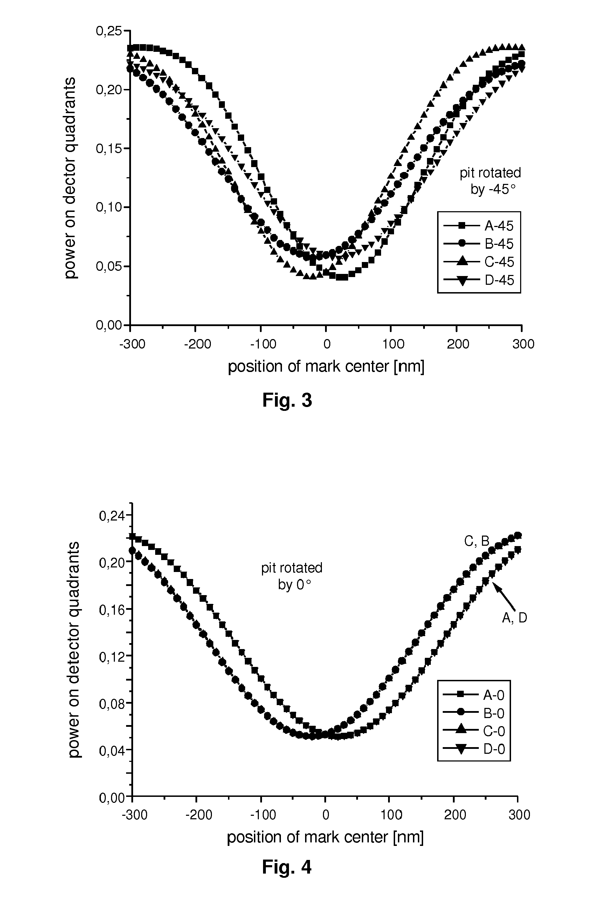

When an angular rotated pit 13, 14 passes through the focus spot of the objective lens 7 of the optical pickup 1, the quadrant detector 11 yields four different signals. The peaks (or the phase) of these signals are shifted relative to each other. The shift depends on the rotation u angle of the pit. Fig. 3 shows the four signals of the quadrant detector 11 when an angular rotated pit with a rotation angle *u*=-45° is moved though the focus spot of the objective lens 7. Fig. 4 shows the four signals for a rotation angle *u*=0°.

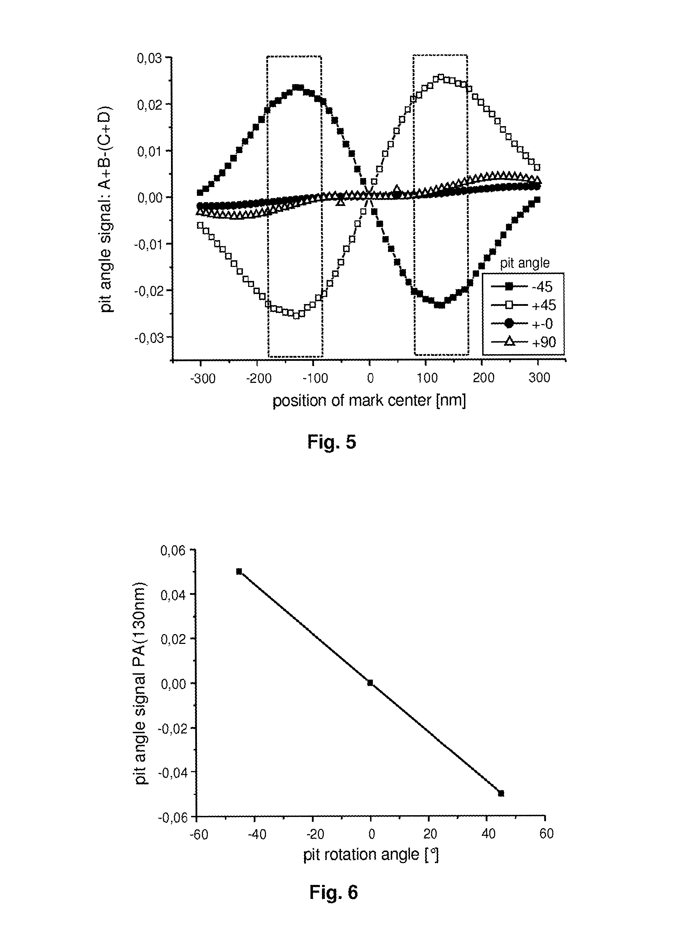

By combining the signals of the quadrants A, B, C, D it is possible to obtain a signal which yields information about the rotation angle. As an example the signal combination PS(x)=A(x)+B(x)-C(x)-D(x) is used, where x denotes the position of the pit. The result is shown in Fig. 5 for four different rotation angles. The dashed rectangles indicate areas with a large sensitivity. As can be seen, the signals for the rotation angles of -45° and 45° can easily be discriminated from the signal for a rotation angle of 0°. The signals for rotation angles between -45° and 45° lie between the depicted signals.

With a single quadrant detector the detectable angular range is limited to -45° to +45°. This is advantageous for reducing the cross-talk from neighboring tracks, because a rotated pit with a rotation angle of *u*=90° is very wide. However, with the signal combination SUM(x)= A(x)+B(x)+C(x)+D(x) it is further possible to detect whether the pit angle is *u*=0° or *u*=90°. At *u*=0° the pit is very long, so SUM(x) has a very wide peak (i.e. a large half width), whereas at *u*=90° the SUM(x) is smaller. Therefore, by combining the signals PA and SUM multiplexing in the range of -90° to +90° is possible.

In general the angular rotated pits are aligned periodically on the optical recording medium. Therefore, it is relatively simple to derive a clock signal which yields information about the actual position of each pit relative to the mark center. If the pits are not aligned periodically, the signals generated by a pit need to be stored and subsequently evaluated. By measuring the above signal PS(x) at two different positions, using e.g. phase sensitive detection, information about the pit angle can be obtained for pit angles between -45° and +45°. Fig. 6 shows a plot of the pit angle signal PA(d)=PS(-d)-PS(+d) for the pit angles of -45, 0, and +45 for d=130nm. From the figure it is clear that it is possible to determine the pit rotation angle u with the function PA provided that a suitable distance d is selected. The distance can easily be determined using a simulation such as the one shown in Fig. 5.

The derived signal is comparable to the known DPD (differential phase detection) or DTD (differential time detection) tracking signal for DVD systems. In these systems the phase shifting effect is very small so that averaging about a lot of pits is necessary. In the case of the angular rotated pits the length of the rotated edge is much larger. The effect is, therefore, significantly stronger. Furthermore, the periodic arrangement of the pits allows a phase sensitive detection of the rotation angle u, which improves the signal to noise ratio.

## Claims

1. Method for detecting a rotation angle of an angular rotated pit (13, 14) on an optical recording medium (8), **including** the steps of:
- irradiating the angular rotated pit (13, 14) with a light beam (9); and
- determining at least two detector signals (A+B, C+D) for a light beam (9) reflected by the angular rotated pit (13, 14) with at least two detector areas of a detector (11);
**wherein**
- a difference signal (PS) is calculated of the at least two detector signals (A+B, C+D); and
- the at least two detector signals (A+B, C+D) and the difference signal (PS) are determined in dependence of the position of the angular rotated pit (13, 14) relative to the mark center.

2. Method according to claim 1, **further** including the step of performing a phase sensitive detection of the difference signal (PS) by determining the difference signal (PS) at two different positions of the angular rotated pit (13, 14) relative to the mark center.

3. Method according to one of claims 1 or 2, **further** including the step of generating a sum signal (SUM) of the at least two detector signals (A+B, C+D).

4. Method according to one of claims 1 to 3, **wherein** a border between the detector areas is essentially parallel to a track (12) on the optical recording medium (8).

5. Method according to one of claims 1 to 4, **wherein** the detector (11) is a four quadrant detector.

6. Device for detecting a rotation angle of an angular rotated pit (13, 14) on an optical recording medium (8), including:
- a light source (2) for irradiating the angular rotated pit (13, 14) with a light beam (9); and
- a detector (11) having at least two detector areas for determining at least two detector signals (A+B, C+D) for a light beam (9) reflected by the angular rotated pit (13, 14);
**wherein**
- the device further includes a calculating unit for calculating a difference signal (PS) of the at least two detector signals (A+B, C+D); and
- the at least two detector signals (A+B, C+D) and the difference signal (PS) are determined in dependence of the position of the angular rotated pit (13, 14) relative to the mark center.

7. Device according to claim 6, **further** including a calculating unit for generating a sum signal (SUM) of the at least two detector signals (A+B, C+D).

8. Device according to claim 6 or 7, **wherein** a border between the detector areas is essentially parallel to a track (12) on the optical recording medium (8).

9. Device according to one of claims 6 to 8, **wherein** the detector (11) is a four quadrant detector.

10. Apparatus for reading from optical recording media, **characterized in that** it is adapted for performing a method according to one of claims 1 to 5 or includes a device according to one of claims 6 to 9 for detecting a rotation angle of an angular rotated pit (13, 14) on an optical recording medium (8).
